# EUROPÄISCHE PATENTSCHRIFT

(11) **EP 1 184 138 B1**
(45) Veröffentlichungstag und Bekanntmachung des Hinweises auf die Patenterteilung: **29.09.2010**
(21) Anmeldenummer: 01810830.8
(22) Anmeldetag: 24.08.2001
(51) Int. Cl.: B25H 1/00, B23Q 1/25

(54) **Bohrvorrichtung**
Drilling device
Dispositif de forage

(30) Priorität: 04.09.2000 DE 10043429
(43) Veröffentlichungstag der Anmeldung: 06.03.2002
(73) Patentinhaber: HILTI Aktiengesellschaft, 9494 Schaan (LI)
(72) Erfinder: Augustin, Michael, 6713 Ludesch (AT)
(74) Vertreter: Wildi, Roland

(56) Entgegenhaltungen:
- US-A- 4 562 919
- US-A- 4 614 456
- US-A- 5 302 045

## Beschreibung

Die Erfindung betrifft eine Bohrvorrichtung gemäss dem Oberbegriff des Patentanspruchs 1.

Zum Herstellen von Bohrungen mit einem grossen Durchmesser in einem harten Untergrund werden Bohrvorrichtungen verwendet, die sich aus einem Führungselement, einem entlang des Führungselementes versetzbaren Schlitten und einem Bohrgerät zusammensetzen, das an dem Schlitten lösbar befestigt ist.

Die Befestigung eines aus der US-4 614 456 bekannten Bohrgerätes an einem Schlitten erfolgt über einen Verbindungsbereich des Bohrgerätes, der formschlüssig mit einem Aufnahmebereich des Schlittens verbindbar ist. Ein erster Aufnahmeabschnitt des Aufnahmebereiches bildet ein Spannhebel, der in einem dem Verbindungsbereich zugewandten Endbereich eine mit der Klemmfläche des Verbindungsbereiches zusammenwirkende Spannfläche aufweist. An einem zweiten Aufnahmeschnitt des Aufnahmebereiches ist ein Teil des Verbindungsbereiches formschlüssig eingehängt.

Die Spannfläche des Spannhebels ist mit Hilfe eines Spannelementes gegen die Kraft einer Feder in einer von dem Verbindungsbereich abgewandten Richtung versetzbar. Das Spannelement wird von der Kolbenstange eines drucklufbetriebenen Zylinders gebildet, die senkrecht zur Versetzungsrichtung des Spannhebels versetzbar ist. Der Spannhebel und die das Spannelement bildende Kolbenstange besitzen aufeinander abgestimmte, schräge Flächen. Beim Versetzen der Kolbenstange wird der Spannhebel in einer von dem Verbindungsbereich abgewandten Richtung versetzt und der Verbindungsbereich gegen den Aufnahmebereich gespannt. Um ein Lösen des Bohrgerätes von dem Schlitten verhindern zu können, muss für die gesamte Dauer der Bearbeitung eines Untergrundes dafür gesorgt werden, dass der Zylinder mit ausreichend Druckluft versorgt wird. Ein grosser Nachteil, den diese bekannte Bohrvorrichtung hat, ist die Abhängigkeit von einer Druckluftquelle. Ausserdem wirkt sich die zusätzlich vorhandene Druckluftzuführleitung negativ auf die gesamte Handhabung der Bohrvorrichtung aus.

Nach der US5302045, die dem Oberbegriff des Patentanspruchs 1 entspricht, ist eine Bohrvorrichtung mit einem Führungselement, einem entlang des Führungselementes versetzbaren Schlitten und einem an dem Schlitten lösbar angeordneten Bohrgerät bekannt, wobei ein Aufnahmebereich des Schlittens zwei voneinander beabstandete Aufnahmeabschnitte aufweist, die mit Verbindungsabschnitten eines entsprechenden Verbindungsbereiches des Bohrgerätes formschlüssig zusammenwirken und wobei eine vom Bohrgerät abgewandte Spannfläche eines Aufnahmeabschnittes gegenüber dem betreffenden Verbindungsabschnitt versetzbar ist, indem die Spannfläche der exzentrische Teil eines um eine Drehachse schwenkbaren Spannbolzens ist, in welchen ein zugeordneter Werkzeugschlüssel als Hebelarm eingreift.

Der Erfindung liegt die Aufgabe zugrunde, eine wirtschaftlich herstellbare Bohrvorrichtung zu schaffen, bei der das Bohrgerät an dem Schlitten schnell, einfach, sowie selbstspannend festlegbar und ohne zusätzliche Werkzeuge vom Schlitten lösbar ist.

Die Lösung dieser Aufgabe erfolgt mit einer Bohrvorrichtung, welche die im kennzeichnenden Abschnitt des Patentanspruchs 1 angeführten Merkmale aufweist.

Damit die für die Festlegung des Bohrgerätes an dem Schlitten notwendige, hohe Spann- kraft im Bereich der Spannfläche erreicht werden kann, ist der Spannhebel als zweiarmiger Hebel ausgebildet, bei dem sich die Spannfläche an einem kürzeren, ersten Hebelarm befindet und ein längerer, zweiter Hebelarm an seinem Endbereich eine vom Bohrgerät abgewandte Spannkontur aufweist, die in der Spannstellung des Spannhebels mit dem Spannelement zusammenwirkt.

Aufgrund der erfindungsgemässen Ausgestaltung der Bohrvorrichtung erfolgt nach einem Einhängen des Bohrgerätes an dem Aufnahmebereich des Schlittens ein selbständiges Verschwenken des Spannhebels in eine Spannstellung, in der das Bohrgerät fest mit dem Schlitten verbunden ist.

Aus wirtschaftlichen Gründen ist das Spannelement zweckmässigerweise von einem Zukaufteil in Form eines Stiftes gebildet, der sich parallel zu einer Drehachse des Spannhebels erstreckt. Der Stift weist beispielsweise einen kreisrunden Querschnitt auf.

Eine gute und gleichmässige Führung des Spannelementes entlang der Spannkontur des Spannelementes wird erreicht, indem vorteilhafterweise das Spannelement in zwei einander gegebenüberliegende Führungsnuten des Schlittens geführt ist, die sich im wesentlichen parallel zur Längserstreckung der Führungssäule erstrecken.

Das federbelastete Spannelement wirkt mit zwei Federn zusammen, die im Abstand voneinander an dem Spannelement angreifen. Um eine Versetzung des Spannhebels von einer Spannstellung in eine Freigabestellung ermöglichen zu können, ist das Spannelement zweckmässigerweise entlang der Führungsnuten gegen die Kraft der beiden Federn entgegen der Bohrrichtung in eine den Spannhebel freigebende Freigabestellung versetzbar.

Um das von beiden Federn in eine gespannte Stellung gezogene Spannelement in eine geöffnete Stellung versetzen zu können, in der der Spannhebel in eine Freigabestellung verschwenkt werden kann, ist es notwendig, eine die Federkraft beider Federn übersteigende Kraft auf das Spannelement auszuüben. Vorzugsweise erfolgt das Ausüben dieser Kraft mittels eines an dem Schlitten schwenkbar angeordneten Lösehebels.

Zweckmässigerweise ist zwischen dem Lösehebel und dem Spannelement eine Schubstange angeordnet, die an einem ersten freien Endbereich eine Durchtrittsöffnung aufweist, die von dem Spannelement durchsetzt wird. Ein zweiter Endbereich der Schubstange ist mit einem Langloch versehen, das sich parallel zur Längserstreckung der Schubstange erstreckt. In dieses Langloch ragt ein am Lösehebel angeordneter Führungsbolzen, mit dem eine auf die Lösehebel einwirkende Lösekraft auf das Spannelement übertragbar ist.

Das Spannelement der erfindungsgemässen Bohrvorrichtung kann von dem, sich in einer Freigabestellung befindenden Spannhebel in einer vorgespannten, geöffneten Stellung gehalten werden. Zu diesem Zweck weist der Spannhebel vorteilhafterweise an der das freie Ende des zweiten Hebelarmes bildenden Stirnseite, eine mit dem Spannelement in Verbindung bringbare Rückhaltekontur auf. Beim Einhängen des Bohrgerätes an dem Aufnahmebereich des Schlittens, erfolgt eine Verschwenkung des Spannhebels in eine Spannstellung. Dabei gleitet das Spannelement entlang der Rückhaltekontur, bis es von den Federn entlang der Spannkontur in eine gespannte Stellung gezogen wird, in der der Spannhebel verriegelt ist.

Die Erfindung wird anhand von Zeichnungen, die ein Ausführungsbeispiel wiedergeben, näher erläutert. Es zeigen:
- Fig.1: einen Schlitten und einen Teil eines Führungselementes einer erfindungsgemässen Bohrvorrichtung;
- Fig. 2: einen Schnitt durch den Schlitten entlang der Linie A-A gemäss Fig. 1; der Spannhebel befindet sich in einer geöffneten Stellung;
- Fig. 3: einen Schnitt durch den Schlitten entlang der Linie B-B gemäss Fig. 1;
- Fig. 4: einen Schnitt durch den Schlitten entlang der Linie C-C gemäss Fig. 1;
- Fig. 5: einen Schnitt durch den Schlitten und einem Teil eines Bohrgerätes entlang der Linie B-B gemäss Fig. 1; der Spannhebel befindet sich in einer gespannten Stellung.

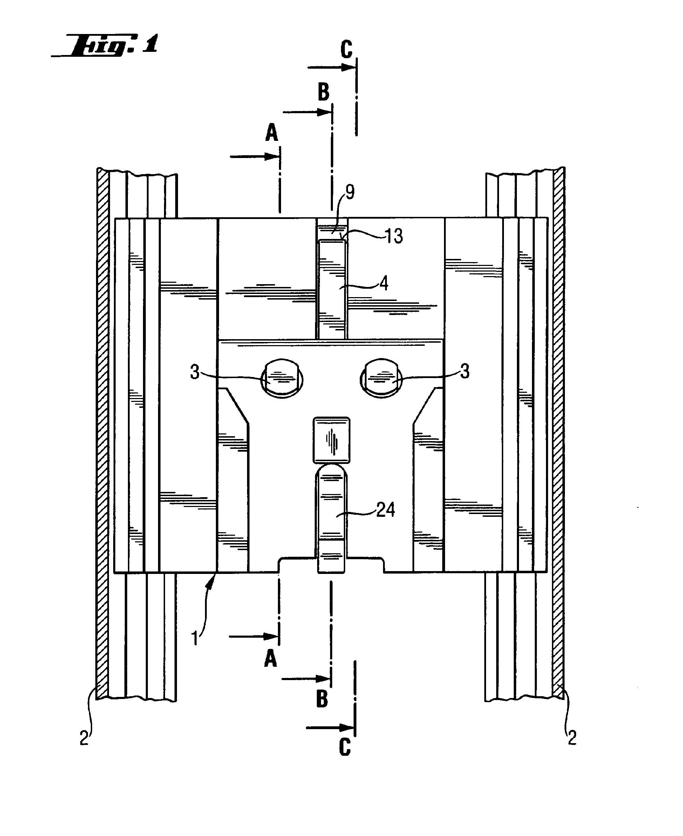

Die Fig. 1 offenbart ausschnittsweise ein Führungselement in Form von zwei im Abstand voneinander angeordneten Führungssäulen 2, die mit einem Schlitten 1 in Verbindung stehen, der entlang dieser Führungssäulen 2 axial verschiebbar geführt ist. Der axialen Verstellung des Schlittens 1 dienen beispielsweise nicht dargestellte mechanische Antriebselemente. Der Schlitten 1 besitzt einen Aufnahmebereich mit zwei Aufnahmeabschnitten 3, 24, die in Bohrrichtung voneinander beabstandet sind. Ein bohrrichtungsseitiger, erster Aufnahmeabschnitt 24 wird von einem am Schlitten 1 schwenkbar angeordneten Spannhebel 4 gebildet. Zwei im Abstand voneinander angeordnete Aufnahmebolzen bilden einen zweiten Aufnahmeabschnitt 3. Unter Längsrichtung des Schlittens 1 ist die Erstreckungsrichtung des Schlittens 1 von einer Fühungrungssäule 2 zur anderen Führungssäule 2 zu verstehen.

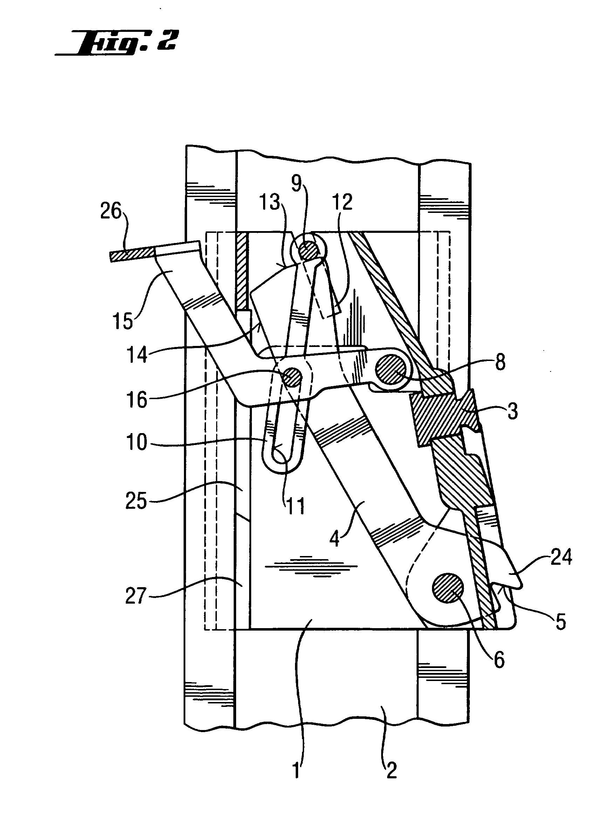

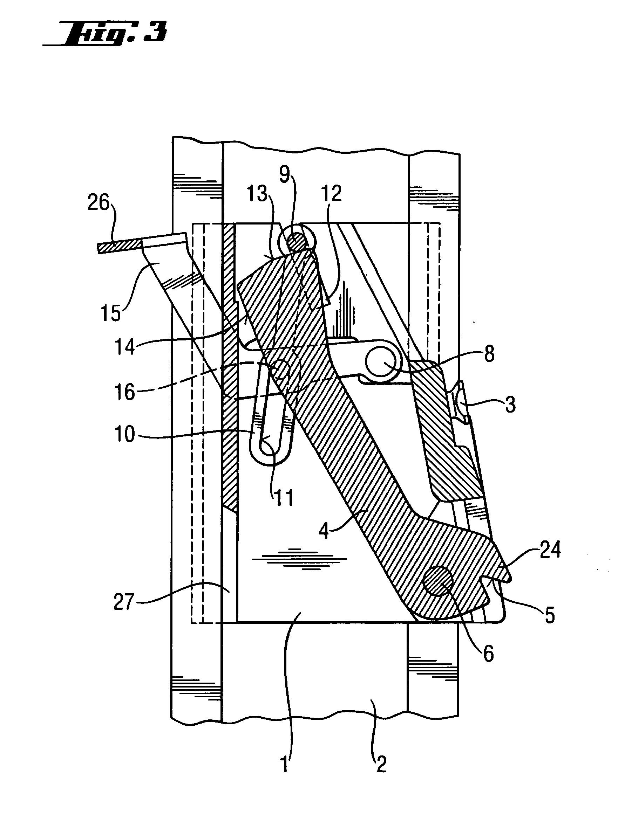

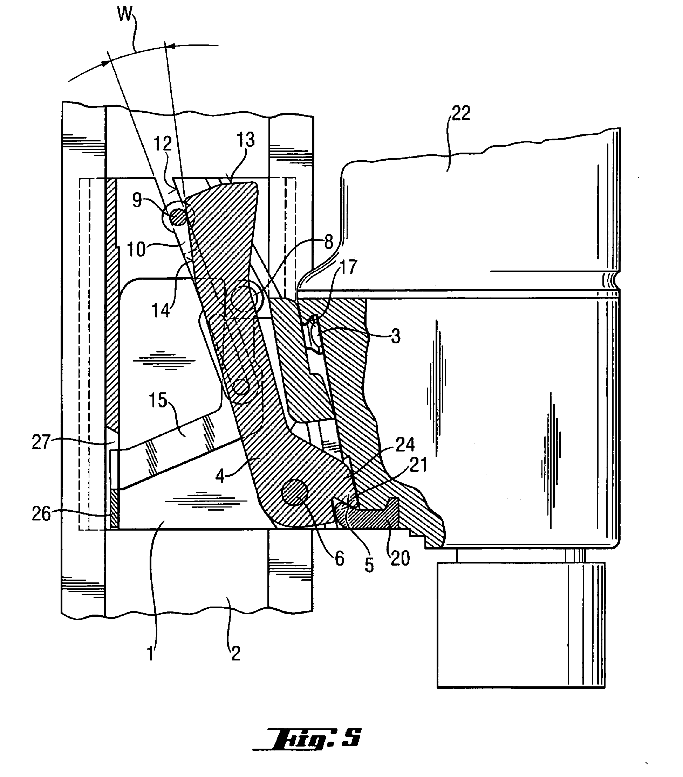

Wie den Fig. 2 bis 5 zu entnehmen ist, ist der Spannhebel 4 um eine Drehachse 6 schwenkbar. Diese Drehachse 6 erstreckt sich senkrecht zu den Längsachsen der Führungssäulen 2 und parallel zu der Längsrichtung des Schlittens 1. Der Spannhebel 4 wird von einem zweiarmigen Hebel gebildet, wobei ein kürzerer, erster Hebelarm den bohrrichtungsseitigen, ersten Aufnahmeabschnitt 24 bildet und eine von dem in Fig. 5 dargestellten Bohrgerät 22 abgewandte Spannfläche 5 aufweist. Diese Spannfläche 5 ist Teil einer V-förmigen Ausnehmung an dem Spannhebel 4, die in Bohrrichtung offen ausgebildet ist. Die Drehachse 6 ist in der Nähe der Spannfläche 5 angeordnet. Ein längerer, zweiter Hebelarm weist eine von dem Bohrgerät abgewandte Spannkontur 14 auf, die mit einem stiftförmigen Spannelement 9 in Verbindung bringbar ist, wenn sich der Spannhebel 9 in einer gespannten Stellung befindet. In einer geöffneten Stellung wirkt eine Rückhaltekontur 13 mit dem Spannelement 9 zusammen, die von einer, das freie Ende des zweiten Hebelarmes bildenden Stirnseite gebildet ist.

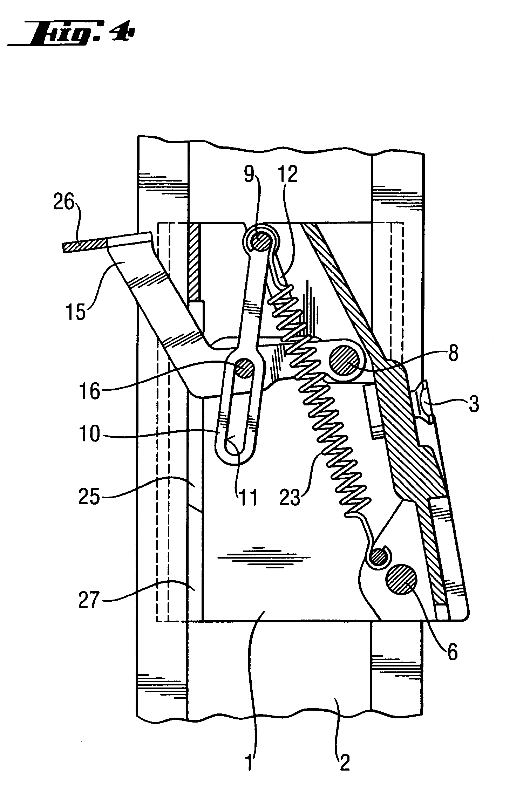

Ein sich innerhalb des Schlittens 1 parallel zur Drehachse 6 erstreckender Stift bildet das Spannelement 9. Beide Endbereiche des Stiftes ragen in zwei einander gegenüberliegend angeordnete Führungsnuten 12, deren Erstreckung gegenüber der Längserstreckung der Führungssäulen 2 unter einem spitzen Winkel verläuft. Das bohrrichtungsseitige Ende der beiden Führungsnuten 12 liegt dem Aufnahmebereich des Schlittens 1 näher als ein Mündungsbereich der beiden Führungsnuten 12 an einem freien Ende des Schlittens 1, das von der Bohrrichtung abgewandt ist. Die in Fig. 5 dargestellte Spannkontur 14 des Spannhebels 4 und die beiden Führungsnuten 12 verlaufen in einer gespannten Stellung des Spannhebels 15 unter einem spitzen Winkel W von 5° bis 20° zueinander. Wie der Fig. 4 entnehmbar ist, wirkt das Spannelement 9 mit einer Feder 23 zusammen, die im Bereich der Drehachse 6 an einem ebenfalls stiftförmigen Vorsprung des Schlittens 1 eingehängt ist. Mit Hilfe der Feder 23 wird das Spannelement 9 entlang der Führungsnuten 12 von einer geöffneten Stellung in eine gespannte Stellung gezogen, wenn der Spannhebel 4 in seine Spannstellung verschwenkt wird.

Der Versetzung des Spannelementes 9 entlang der Führungsnuten 12 in einer von der Bohrrichtung abgewandten Richtung dienen zwei im Abstand voneinanander angeordnete Lösehebel 15, die um eine Achse 8 schwenkbar sind, die parallel zur Drehachse 6 verläuft. Beide Lösehebel 15 sind an ihrem freien Ende, das der Achse 8 gegenüberliegt, mit einem Verbindungssteg 26, einstückig miteinander verbunden. Dieser Verbindungssteg 26 bildet ein vom Anwender fassbares Griffteil, mit dem beide Lösehebel 15 gleichzeitig in eine Schwenkbewegung versetzbar sind.

Das Spannelement 9 steht über jeweils eine Schubstange 10 mit einem Lösehebel 15 in Verbindung. Die Schubstangen 10 weisen an einem ersten Endbereich eine Durchtrittsöffnung auf, die von dem Spannelement 9 durchsetzt wird. Ein zweiter Endbereich der Schubstangen 10 ist mit einem Langloch 11 versehen, das parallel zur Längserstreckung der Schubstangen 10 angeordnet ist. In dieses Langloch 11 ragt ein am Lösehebel 15 angeordneter Führungsbolzen 16, mit dem die auf die Lösehebel 15 ausgeübte Lösekraft eines Anwenders auf das Spannelement 9 übertragbar ist. Die Länge des Langloches 11 ist so bemessen, dass die Lösehebel 15 ihre Ausgangsstellung auch dann einnehmen können, wenn das Spannelement 9 in der geöffneten Stellung des Spannhebels 4 unter Vorspannung an der Rückhaltekontur 13 anliegt.

Ein Gehäuse des Schlittens 1 weist zwei voneinander beabstandete, schlitzartige Durchtrittsöffnungen 25 auf, die am bohrrichtungsseitigen, freien Ende des Gehäuses offen ausgebildet sind. Die beiden Lösehebel 15 durchsetzen die beiden schlitzartigen Durchtrittsöffnungen 25, wenn sie von dem Anwender entgegen der Bohrrichtung in eine Freigabestellung verschwenkt werden, in der sich das Spannelement 9 in einer geöffneten Stellung befindet und den Spannhebel 4 nicht mehr verriegelt. Der sich am freien Endbereich der beiden Lösehebel 15 erstreckende Verbindungssteg 26 findet in einer Ausgangsstellung der Lösehebel 15 Aufnahme in einer Ausnehmung 27 des Gehäuses, die sich zwischen den beiden schlitzartigen Öffnungen 25 erstreckt. Entgegen der Bohrrichtung ist die Erstreckung dieser Ausnehmung 27 kürzer als die Erstreckung der schlitzartigen Durchtrittsöffnungen 25.

Im Folgenden wird das Festlegen des Bohrgerätes 22 an den Schlitten 1 und das Entfernen des Bohrgerätes 22 von dem Schlitten 1 beschrieben.

Damit das Bohrgerät 22 an dem Schlitten 1 festgelegt werden kann, muss sich der Spannhebel 4 in einer Freigabestellung befinden, wie dies in den Fig. 2 bis 4 dargestellt ist. In der Freigabetellung des Spannhebels 4 liegt das Spannelement 9 an der Rückhaltekontur 13 des Spannhebels 4 an und die V-förmige Ausnehmung mit der Spannfläche 5 am ersten Aufnahmeabschnitt 24 des Spannhebels 4 ist entgegen der Bohrrichtung zurückversetzt angeordnet.

Beim Ansetzen des Bohrgerätes 22 an dem Schlitten 1 ist darauf zu achten, dass ein schwalbenschwanzförmiger Verbindungsbereich des Bohrgerätes formschlüssig an dem zweiten Aufnahmeabschnitt 3 des Schlittens 1 eingehängt wird. Der Verbindungsbereich weist am bohrrichtungsseitigen freien Ende eine Klemmplatte mit einem, eine Klemmfläche 21 aufweisenden, V-förmigen Vorsprung auf, der sich anschliessend in der V-förmigen Ausnehmung des Spannhebels 4 zentriert und den Spannhebel 4 in eine Spannstellung gemäss Fig. 5 verschwenkt. Das Spannelement 9 kann anschliessend von der Feder 23 entlang der Spannkontur 14 des Spannhebels 4 in eine gespannte Stellung versetzt werden. Dabei baut sich an der Spannfläche 5 eine Spannkraft auf, die ausreicht um das Bohrgerät 22 sicher und spielfrei an dem Schlitten 1 festzulegen.

Um das Bohrgerät 22 von dem Schlitten 1 abnehmen zu können, muss der Anwender den Verbindungssteg 26 mit beiden Lösehebeln 15 von einer Ausgangsstellung in eine Freigabestellung verschwenken. Dabei wird das stiftförmige Spannelement 9 in den Führungsnuten 12 gegen die Kraft der Feder 23 entgegen der Bohrrichtung von einer gespannten Stellung in die geöffnete Stellung versetzt. Bei der anschliessenden Abnahme des Bohrgerätes 22 von dem Schlitten 1, wird der Spannhebel 4 von einer Spannstellung in eine Freigabestellung verschwenkt in der das Spannelement 9 wiederum an der Rückhaltekontur 13 des Spannhebels 4 anliegt.

## Patentansprüche

1. Bohrvorrichtung mit wenigstens einem Führungselement (2), einem entlang des Führungselementes (2) versetzbaren Schlitten (1) und einem an dem Schlitten (1) lösbar angeordneten Bohrgerät (22), wobei ein Aufnahmebereich des Schlittens (1) zwei voneinander beabstandete Aufnahmeabschnitte (3, 24) aufweist, die mit Verbindungsabschnitten (17, 20) eines entsprechenden Verbindungsbereiches des Bohrgerätes (22) formschlüssig zusammenwirken und eine vom Bohrgerät (22) abgewandte Spannfläche (5) eines Aufnahmeabschnittes (24) gegenüber dem betreffenden Verbindungsabschnitt (20) versetzbar ist, wobei die Spannfläche (5) Teil eines um eine Drehachse (6) schwenkbaren Spannhebels (4) ist,
**dadurch gekennzeichnet, dass** der Spannhebel (4) zwei Hebelarme aufweist, wobei an einem kürzeren, ersten Hebelarm die Spannfläche (5) angeordnet ist und ein längerer, zweiter Hebelarm an seinem Endbereich mit einer vom Bohrgerät (22) abgewandten Spannkontur (14) versehen ist, die in der Spannstellung des Spannhebels (4) mit einem Spannelement (9) zusammenwirkt.

2. Bohrvorrichtung nach Anspruch 1, **dadurch gekennzeichnet, dass** das Spannelement (9) von einem Stift gebildet ist, der sich parallel zur Drehachse (6) des Spannhebels (4) erstreckt.

3. Bohrvorrichtung nach Anspruch 2, **dadurch gekennzeichnet, dass** das Spannelement (9) in zwei einander gegebenüberliegende Führungsnuten (12) des Schlittens (1) geführt ist, die sich im wesentlichen parallel zur Längserstreckung der Führungssäule (2) erstrecken.

4. Bohrvorrichtung nach Anspruch 3, **dadurch gekennzeichnet, dass** das Spannelement (9) entlang der Führungsnuten (12) gegen die Kraft wenigstens einer Feder (23) entgegen der Bohrrichtung in eine den Spannhebel (4) freigebende Freigabestellung versetzbar ist.

5. Bohrvorrichtung nach Anspruch 4, **dadurch gekennzeichnet, dass** die Versetzung des Spannelementes (9) in eine Freigabestellung mittels eines Lösehebels (15) erfolgt, der am Schlitten (1) schwenkbar angeordnet ist.

6. Bohrvorrichtung nach Anspruch 5, **dadurch gekennzeichnet, dass** zwischen dem Lösehebel (15) und dem Spannelement (9) eine Schubstange (10) angeordnet ist.

7. Bohrvorrichtung nach Anspruch 6, **dadurch gekennzeichnet, dass** der Spannhebel (4) an der das freie Ende des zweiten Hebelarmes bildenden Stirnseite eine mit dem Spannelement (9) in Verbindung bringbare Rückhaltekontur (14) aufweist.

## Claims

1. Drilling device with at least one guide element (2), a carriage 1) that may be shifted along the guide element (2) and a drilling apparatus (22) detachably arranged on the carriage (1 in which an accommodation area of the carriage (1) has two accommodation sections 3, 24) at a distance from each other, which positively work together with connecting sections (17, 20) of a corresponding connecting area of the drilling apparatus (22) and a clamping surface (5) of an accommodation area (24), which faces away from the drilling apparatus (22) can be shifted in relation to the relevant connecting section (20), in which the clamping surface (5) is part of a clamping lever (4) that can be pivoted around an axis of rotation (6), **characterised in that** the clamping lever (4) has two lever arms, in which the clamping surface (5) is arranged on a shorter, first lever arm and a longer, second lever arm is provided with a clamping profile (14) facing away from the drilling apparatus (22), which works together with a clamping element (9) in the clamping position of the clamping lever (4).

2. Drilling device according to clam 1, **characterised in that** the clamping element (9) consists of a pin which extends parallel to the axis of rotation (6) of the clamping lever (4).

3. Drilling device according to clam 2, **characterised in that** the clamping element (9) is guided into two guide grooves (12) of the carriage (1) that are opposite each other, which extend essentially in parallel to the longitudinal extension of the guide pillar (2).

4. Drilling device according to claim 3, **characterised in that** the clamping element (9) may be shifted along the guide grooves (12) against the force of at least one spring (23) contrary to the drilling direction intro a release position that releases the clamping lever (4).

5. Drilling device according to claim 4, **characterised in that** the shifting of the clamping element (9) into a release position is effected by means of a release lever (15) which is arranged on the carriage (1) sc that it can pivot.

6. Drilling device according to claim 5, **characterised in that** a push rod (10) is arranged between the release lever (15) and the clamping element (9).

7. Drilling device according to claim 6, **characterised in that** the clamping lever (4) has on the front face forming the free end of the second lever arm a retaining profile (14) that can be connected with the clamping element (9).

## Revendications

1. Dispositif de perçage comportant au moins un élément de guidage (2), un chariot (1) mobile le long de l'élément de guidage (2), et un outil de perçage (22) agencé sur le chariot (1)de manière amovible, dans lequel une zone de réception du chariot (1) comporte deux parties de réception (3, 24) espacées l'une de l'autre qui coopèrent avec des parties de liaison (17, 20) d'une zone de liaison correspondante de l'outil de perçage (22) par complémentarité de formes, et une surface de serrage (5) d'une partie de réception (24), opposée à l'outil de perçage (22) est mobile par rapport à la partie de liaison correspondante (20), dans lequel la surface de serrage (5) est une partie d'un levier de serrage (4) pouvant pivoter autour d'un axe de rotation (6),
**caractérisé en ce que** le levier de serrage (4) comporte deux bras de levier, dans lequel la surface de serrage (5) est agencée sur un premier bras de levier plus court, et un second bras de levier plus long est muni, au niveau de sa zone d'extrémité, d'un contour de serrage (14) opposé à l'outil de perçage (22) qui coopère avec un élément de serrage (9) dans la position de serrage du levier de serrage (4).

2. Dispositif de perçage selon la revendication 1, **caractérisé en ce que** l'élément de serrage (9) est formé par une goupille s'étendant parallèlement à l'axe de rotation (6) du levier de serrage (4).

3. Dispositif de perçage selon la revendication 2, **caractérisé en ce que** l'élément de serrage (9) est guidé dans deux rainures de guidage (12) du chariot (1) situées l'une en face de l'autre, lesdites rainures s'étendant sensiblement parallèles à l'extension longitudinale de la colonne de guidage (2).

4. Dispositif de perçage selon la revendication 3, **caractérisé en ce que** l'élément de serrage (9) est mobile à l'opposé de la direction de perçage, le long des rainures de guidage (12) contre la force d'au moins un ressort (23) dans une position de libération qui libère le levier de serrage (4).

5. Dispositif de perçage selon la revendication 4, **caractérisé en ce que** le déplacement de l'élément de serrage (9) dans une position de libération s'effectue au moyen d'un levier de libération (15) qui est agencé de manière pivotante sur le chariot (1).

6. Dispositif de perçage selon la revendication 5, **caractérisé en ce qu'**une tige de poussoir (10) est agencée entre le levier de libération (15) et l'élément de serrage (9).

7. Dispositif de perçage selon la revendication 6, **caractérisé en ce que** le levier de serrage (4) comporte, au niveau de la face avant formant l'extrémité libre du second bras de levier, un contour de retenue (14) pouvant venir en contact avec l'élément de serrage (9).
